# DEMANDE DE BREVET EUROPEEN

(11) **EP 4 738 288 A1**
(43) Date de publication de la demande: **06.05.2026**
(21) Numéro de dépôt: 25203336.0
(22) Date de dépôt: 19.09.2025
(51) Int. Cl.: G06V 20/00, G06V 40/40, G06V 10/98

(54) **MÉTHODE ET DISPOSITIF DE CALIBRATION D'UNE CAMÉRA UTILISÉE EN RECONNAISSANCE OPTIQUE**

(30) Priorité: 31.10.2024 FR 2411932
(71) Demandeur: Idemia Public Security France, 92400 Courbevoie (FR)
(72) Inventeur: POUET, Marina, 92400 Courbevoie (FR); PEPING, Stéphane, 92400 Courbevoie (FR); BRONSART, Sébastien, 92400 Courbevoie (FR); THUILLIER, Cédric, 92400 Courbevoie (FR); BEAUDET, Jean, 92400 Courbevoie (FR)
(74) Mandataire: IPS

(57) **Abrégé**

La présente invention concerne un procédé de calibration des terminaux mobiles d'un même modèle équipé d'une caméra utilisée dans un procédé de reconnaissance optique sans contact comportant des étapes de:
- obtention d'images de sujets capturées par des terminaux d'un même modèle de terminal, chaque image étant associée à une valeur de mise au point utilisée lors de la capture ;
- pour chaque image, détermination d'une résolution du sujet dans l'image à partir de la taille connue du sujet et de la taille en pixel du sujet dans l'image ;
- estimation d'une relation entre la valeur de mise au point et la résolution du sujet dans l'image par régression sur un ensemble de points, chaque point correspondant au couple valeur de mise au point et résolution du sujet dans l'image pour une image obtenue ;
- transmission de ladite relation aux terminaux du même modèle.

## Description

L'invention se rapporte à des systèmes de reconnaissance optique par caméra. La reconnaissance optique peut concerner la reconnaissance optique d'un utilisateur, par reconnaissance d'une empreinte digitale, d'une empreinte palmaire ou encore une reconnaissance faciale. Elle peut également concerner la reconnaissance optique d'un document, tel qu'un document officiel d'identité.

Dans le domaine de l'acquisition d'images d'empreintes digitales, d'empreintes palmaires, de visage ou de documents à des fins de reconnaissance optique, nous avons besoin d'obtenir des images pour lesquelles la résolution de l'empreinte est connue et suffisamment précise. La résolution est définie par le nombre de points dans l'image capturée par unité de longueur de l'objet capturé. On parle aussi de résolution du sujet dans l'image. Par exemple, la résolution peut s'exprimer en points par pouce, PPP, ou en points par centimètre, PPC. Cette résolution ne doit pas être confondue avec la résolution d'une image imprimée où elle s'exprime par le nombre de points par unité de longueur de l'image imprimée. Lorsque le capteur utilisé pour capturer l'image fonctionne au contact de l'objet la résolution est connue par le système d'acquisition. Les capteurs utilisés dans les systèmes de capture d'empreinte digitale par contact obtiennent des images ayant une résolution généralement comprise entre 500 PPP ou 1000 PPP.

Du fait de la prolifération des terminaux mobile tels que les téléphones intelligents (« smartphone » en anglais) ou les tablettes, généralement dotés de caméras de bonne qualité, les systèmes de reconnaissance optique tendent à remplacer les capteurs dédiés par contact par ces terminaux. Les systèmes de caméra équipant ces terminaux nécessitent que l'objet capturé soit distant d'au moins quelques centimètres de l'objectif de la caméra pour pouvoir obtenir une mise au point, et donc une image nette. La distance précise entre le sujet et l'objectif de la caméra n'est pas contrôlée. Or la résolution de l'image obtenue dépend de cette distance, elle diminue avec l'éloignement du sujet. Ces systèmes de reconnaissance optique sont généralement déployés à très grande échelle, chaque utilisateur utilisant son propre terminal pour s'authentifier, typiquement auprès d'un service.

Ces systèmes de reconnaissance optique peuvent être utilisés pour sécuriser l'accès à des services en ligne, à des bâtiments. Ils peuvent également sécuriser des transactions. L'usage spécifique du système de reconnaissance optique et les interactions entre celui-ci et le service dont il sécurise l'accès ne sont pas l'objet du présent document.

Les algorithmes de reconnaissance optique utilisés pour authentifier le sujet nécessitent une résolution minimum pour assurer leur bon fonctionnement. Nous avons vu que dans le cas des empreintes digitales, une résolution minimum de 500 PPP est souhaitable par exemple. Les seuils effectifs de résolution à respecter dépendent de la catégorie du sujet, empreinte digitale, empreinte palmaire, visage ou document, mais aussi des algorithmes de reconnaissance optique utilisés.

Ces systèmes de reconnaissance optique sont la proie de tentatives de fraude visant à faire authentifier une représentation du sujet comme le sujet original. Cette représentation peut, par exemple, être une photographie du sujet présentée à la caméra. Cette représentation est rarement à l'échelle du sujet. Typiquement, la représentation est plus grande que l'original pour tenter de mieux en représenter les détails dans l'espoir de tromper le système de reconnaissance optique.

La détection de ce type de fraude permet d'améliorer la fiabilité de la reconnaissance optique.

L'invention présentée vise à résoudre ce problème.

### Exposé de l'invention

A cet effet, l'invention propose un procédé de calibration par modèle de terminal permettant d'obtenir une relation entre les valeurs de focus, c'est-à-dire de distance de mise au point de la caméra, et la résolution du sujet dans l'image. La valeur de focus fait typiquement partie des métadonnées associées à l'image capturée. La taille du sujet, tel qu'une empreinte ou un document, bien que pouvant être légèrement variable d'un sujet à un autre, est suffisamment fixe pour un même type de sujet pour permettre d'établir cette relation statistiquement sur un ensemble de capture d'images du sujet. Dans le cas de la reconnaissance faciale, la distance entre les yeux est utilisée comme taille du sujet. Cette distance est suffisamment fixe pour les besoins de l'application, la distance moyenne entre les yeux étant de 65 mm pour un adulte. Une fois cette relation établie, il devient possible lors d'une nouvelle capture d'image d'un sujet en vue de sa reconnaissance optique de comparer la résolution attendue obtenue par cette relation et la résolution mesurée dans l'image du sujet. Une différence importante entre cette résolution attendue et la résolution mesurée indique une forte présomption de tentative de fraude.

Il est ainsi proposé un procédé de calibration des terminaux mobiles d'un même modèle équipé d'une caméra utilisée dans un procédé de reconnaissance optique sans contact caractérisé en ce qu'il comporte les étapes suivantes :
- obtention d'une première pluralité d'images de sujets capturées par des terminaux d'un même modèle de terminal, chaque image étant associée à une valeur de mise au point utilisée lors de la capture ;
- pour chaque image, détermination d'une résolution du sujet dans l'image à partir de la taille connue du sujet et de la taille en pixel du sujet dans l'image ;
- estimation d'une première relation entre la valeur de mise au point et la résolution du sujet dans l'image par régression sur un ensemble de points, chaque point correspondant au couple valeur de mise au point et résolution du sujet dans l'image pour une image obtenue ;
- transmission de la première relation estimée aux terminaux du même modèle.

Dans certains modes de réalisation, l'étape d'estimation d'une relation est exécutée lorsque le nombre d'images obtenues est supérieur à un seuil prédéterminé.

**Dans** certains modes de réalisation, l'étape de transmission est exécutée lorsqu'un coefficient de corrélation obtenu lors de la régression est supérieur à un seuil prédéterminé.

Dans certains modes de réalisation, l'étape d'estimation d'une relation est suivie d'une étape de calcul de la distance de chaque point à la courbe obtenue et d'une étape d'estimation d'une nouvelle relation effectuée en excluant les points les plus éloignés de la courbe obtenue lors de la première estimation.

Dans certains modes de réalisation, le procédé comporte après l'estimation de première relation les étapes suivantes :
- obtention d'une seconde pluralité d'images de sujets capturées par des terminaux du même modèle de terminal, chaque image étant associée à une valeur de mise au point utilisée lors de la capture ;
- pour chaque image de la seconde pluralité d'images, détermination d'une résolution du sujet dans l'image à partir de la taille connue du sujet et de la taille en pixel du sujet dans l'image ;
- estimation d'une seconde relation entre la valeur de mise au point et la résolution du sujet dans l'image par régression sur un ensemble de points, chaque point correspondant au couple valeur de mise au point et résolution du sujet dans l'image pour une image obtenue appartenant à la première ou à la seconde pluralité d'images ;
- transmission de la seconde relation estimée aux terminaux du même modèle si la différence entre la première relation et la seconde relation est supérieure à un seuil prédéterminé.

Dans certains modes de réalisation, l'étape d'obtention d'une première pluralité d'images comporte pour chaque image une étape de détection d'un type de sujet représenté dans l'image.

Dans certains modes de réalisation, le type du sujet est l'un des types suivants :
- doigt,
- paume de la main,
- visage,
- document.

Il est également proposé un procédé de reconnaissance optique d'un sujet comportant, par un terminal comportant une caméra, les étapes suivantes :
- capture d'une image du sujet associée à la valeur de mise au point utilisée lors de la capture ;
- reconnaissance optique du sujet ;
caractérisé en ce qu'il comporte les étapes suivantes :
- obtention d'une relation entre la valeur de mise au point et la résolution du sujet dans l'image ;
- détermination d'une résolution mesurée du sujet dans l'image à partir d'une taille connue du sujet et de la taille en pixel du sujet dans l'image ;
- détermination d'une résolution attendue du sujet dans l'image déterminée à partir de la valeur de mise au point et de la relation obtenue ;
- rejet de l'image capturée pour suspicion de fraude lorsque la résolution mesurée et la résolution attendue diffèrent d'une valeur supérieure à un seuil prédéterminé.

Dans certains modes de réalisation, le procédé comporte les étapes suivantes :
- détermination d'une plage de résolution du sujet dans l'image relative à la reconnaissance optique du sujet ;
- détermination de la plage correspondante de valeurs de mise au point sur la base de la relation ;
- détermination d'une indication indiquant de rapprocher ou d'éloigner le sujet lors de la capture lorsque la valeur de mise au point est en dehors de la plage ; et
- affichage de l'indication lors de la capture de l'image.

Il est également proposé un produit programme informatique comportant des instructions pour la mise en œuvre du procédé selon l'invention, lorsque ce programme est exécuté par un processeur.

Il est également proposé un support d'enregistrement non transitoire lisible par un ordinateur sur lequel est enregistré un programme pour la mise en œuvre du procédé selon l'invention lorsque ce programme est exécuté par un processeur.

Il est également proposé un dispositif de calibration des terminaux d'un même modèle équipé d'une caméra utilisée dans un procédé de reconnaissance optique caractérisé en ce qu'il comporte un processeur configuré pour exécuter les étapes suivantes :
- obtention d'une première pluralité d'images de sujets capturées par des terminaux d'un même modèle de terminal, chaque image étant associée à une valeur de mise au point utilisée lors de la capture ;
- pour chaque image, détermination d'une résolution du sujet dans l'image à partir de la taille connue du sujet et de la taille en pixel du sujet dans l'image ;
- estimation d'une première relation entre la valeur de mise au point et la résolution du sujet dans l'image par régression sur un ensemble de points, chaque point correspondant au couple valeur de mise au point et résolution du sujet dans l'image pour une image obtenue ;
- transmission de la première relation estimée aux terminaux du même modèle.

Il est également proposé un terminal mobile de reconnaissance optique sans contact d'un sujet, le terminal comportant une caméra et un processeur configuré pour exécuter les étapes suivantes :
- capture d'une image du sujet associée à valeur de mise au point utilisée lors de la capture ;
- reconnaissance optique du sujet ;
caractérisé en ce qu'il comporte les étapes suivantes :
- obtention d'une relation entre la valeur de mise au point et la résolution du sujet dans l'image ;
- détermination d'une résolution mesurée du sujet dans l'image à partir d'une taille connue du sujet et de la taille en pixel du sujet dans l'image ;
- détermination d'une résolution attendue du sujet dans l'image déterminée à partir de la valeur de mise au point et de la relation obtenue ;
- rejet de l'image capturée lorsque la résolution mesurée et la résolution attendue diffère d'une valeur supérieure à un seuil prédéterminé.

La présente invention vise également un programme informatique comportant des instructions pour la mise en œuvre du procédé précédemment décrit, lorsque ce programme est exécuté par un processeur.

Ce programme peut utiliser n'importe quel langage de programmation (par exemple, un langage objet ou autre), et être sous la forme d'un code source interprétable, d'un code partiellement compilé ou d'un code totalement compilé.

Un autre aspect concerne un support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant une unité de traitement couplée de manière opérationnelle à des moyens mémoire et à un module d'interface entrées/sorties, pour exécuter tout ou partie du procédé décrit ci-avant.

### Brève description des dessins

D'autres caractéristiques, détails et avantages de l'invention apparaîtront à la lecture de la description détaillée ci-après. Celle-ci est purement illustrative et doit être lue en regard des dessins annexés, sur lesquels :
Fig. 1

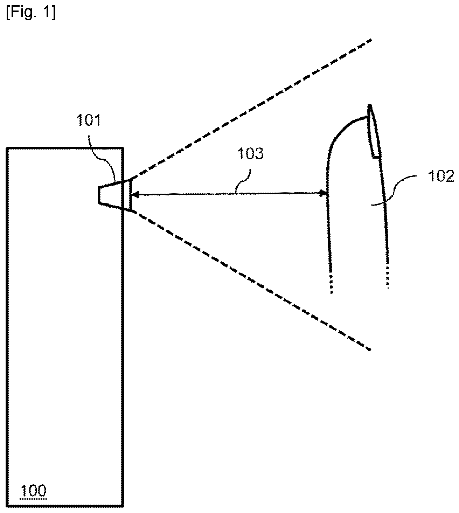

   [Fig. 1] illustre le système de prise de vue d'un sujet par une application de reconnaissance optique exécutée sur un terminal mobile ;
Fig. 2

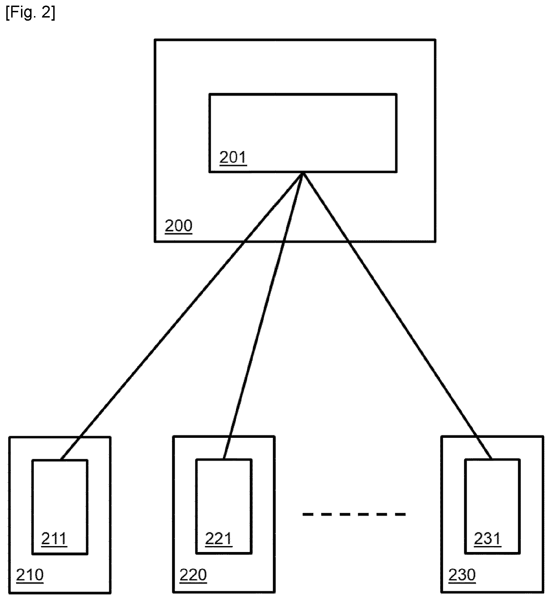

   [Fig. 2] illustre l'architecture d'un système de reconnaissance optique dans des modes de réalisation de l'invention ;
Fig. 3

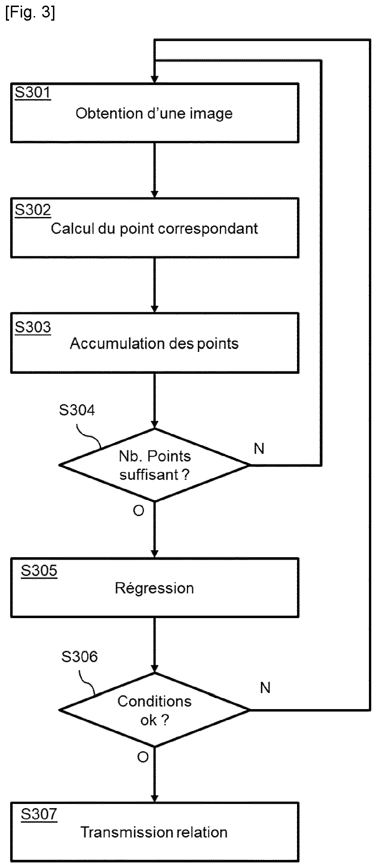

   [Fig. 3] illustre les principales étapes d'un procédé de calibration selon un mode de réalisation de l'invention ;
Fig. 4

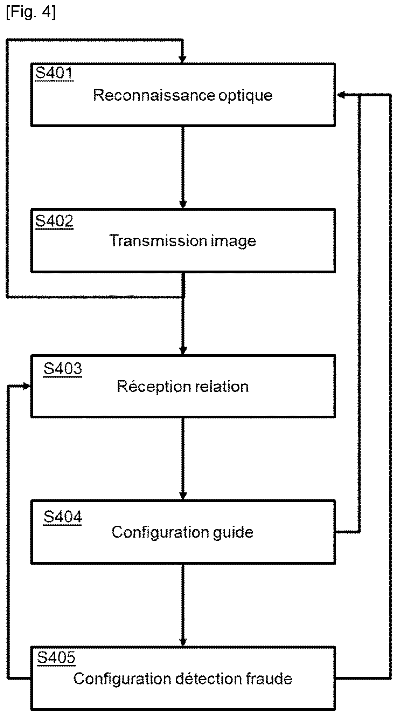

   [Fig. 4] illustre les principales étapes du procédé de calibration et son utilisation par le terminal dans des modes de réalisation de l'invention ;
Fig. 5

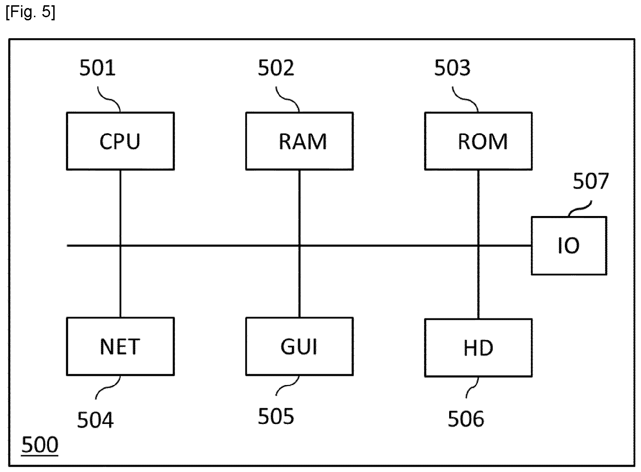

   [Fig. 5] est un bloc-diagramme schématique d'un dispositif de traitement de l'information pour la mise en œuvre d'un ou plusieurs modes de réalisation de l'invention.

### Description détaillée

La figure 1 illustre le système de prise de vue d'un sujet 102 par une application de reconnaissance optique exécutée sur un terminal mobile 100.

Le terminal mobile 100 est typiquement un téléphone intelligent, une tablette numérique ou tout type de terminal informatique doté d'un processeur pouvant exécuter un programme informatique et d'une caméra 101 pouvant prendre une image d'un sujet 102. Le terminal doit également être pourvu de moyens de communication avec un réseau de communication de données.

Les terminaux fonctionnant au sein du système de reconnaissance optique peuvent être très variés. Toutefois, chaque terminal correspond à un modèle de terminal. Un modèle de terminal est donc associé à un modèle de terminal bien défini et à un type de caméra bien défini. Le comportement du système de capture est donc considéré comme uniforme pour un modèle de terminal donné malgré les possibles légères variations dues aux inévitables aléas du processus de fabrication. Un modèle de terminal est identifié par un identifiant du modèle, lequel identifiant étant généralement inséré dans les métadonnées associées à chaque image capturée par le terminal. Il est donc possible de connaître le modèle de terminal, et donc de caméra, utilisé pour capturer une image à partir des métadonnées associées à cette image lorsqu'elles existent. Cet identifiant du modèle est également mémorisé par le système d'exploitation du terminal et accessible aux applications exécutées sur le terminal et plus particulièrement à l'application de reconnaissance optique que l'on détaille ci-dessous. Le modèle de terminal peut donc être obtenu soit à partir des métadonnées de l'image soit par l'application auprès du système d'exploitation (par exemple par le biais de l'API de la caméra).

La caméra 101 est composée d'un capteur photosensible et d'un objectif. Elle est de type à mise au point automatique autrement appelé autofocus. Cela signifie qu'en fonction de la distance 103 entre l'objectif et le sujet 102, la caméra est capable de faire la mise au point automatiquement sur le sujet 102. Cette mise au point est représentée par une valeur de mise au point, autrement appelée valeur de focus, qui dépend directement de la distance 103 entre l'objectif et le sujet 102. La valeur de focus est donc représentative de la distance 103 entre l'objectif de la caméra et le sujet 102.

Le sujet 102 illustré sur la figure est un doigt dont l'image est utilisée pour une reconnaissance d'empreinte digitale. Le système est similaire dans le cas d'une paume de main pour une reconnaissance palmaire, du visage pour une reconnaissance faciale ou d'un document pour une reconnaissance de document officiel tel qu'un document d'identité.

La figure 2 illustre l'architecture d'un système de reconnaissance optique dans des modes de réalisation de l'invention.

Le système de reconnaissance optique est contrôlé par un service logiciel de reconnaissance optique 201 hébergé par une plateforme 200 distante et centralisée. La plateforme 200 est connectée à un réseau de communication de données, typiquement le réseau Internet. La plateforme 200 peut être constituée physiquement d'un ou plusieurs serveurs connectés entre eux pour former un ensemble de serveurs (ou *cluster* en anglais) selon les ressources nécessitées par le service logiciel 201.

Le système de reconnaissance optique est également composé d'un ensemble de terminaux mobiles 210-230. Ces terminaux mobiles sont de différents modèles. Ils hébergent respectivement les applications mobiles 211-231 en charge du contrôle de la reconnaissance optique sur les terminaux. Ces applications mobiles 211-231 sont, en particulier, en charge de la gestion des prises de vue du sujet aux fins de reconnaissance optique.

Les terminaux mobiles 210-230 sont également connectés au réseau de communication de données, typiquement via un réseau de téléphonie mobile. Ainsi, les applications mobiles 211-231 sont aptes à communiquer avec le service de reconnaissance optique 201 afin d'échanger des données avec celui-ci.

Les potentiels échanges entre les applications mobiles 211-231 et le service de reconnaissance optique 201 liés à la reconnaissance optique elle-même ne sont pas décrits dans le présent document. Nous décrivons ici uniquement les échanges liés au procédé de calibration et à son utilisation pour détecter des fraudes tel qu'il est détaillé ci-après. Dans le mode de réalisation décrit le service de reconnaissance optique 201 est également en charge de la calibration des terminaux 210-230. Dans d'autres modes de réalisation, la calibration peut être prise en charge par un service de calibration séparé du service de reconnaissance optique 201. Ce service de calibration peut être hébergé par la plateforme 200 ou par une autre plateforme similaire connectée au réseau de communication de données. Lorsque le service de reconnaissance optique et le service de calibration sont séparés, les étapes liées à la calibration décrites dans ce document comme effectuées par le service de reconnaissance optique sont effectuées par le service de calibration. Les images nécessaires à la calibration sont alors transmises au service de calibration par les terminaux, ce qui implique que les terminaux transmettent leurs images aux deux services. Alternativement, le service de reconnaissance optique traite les images, notamment en instantané, avec l' information de calibration qu'il a en mémoire et transmet les images reçues des terminaux au service de calibration. Dans les deux cas, le service de calibration est centralisé et reçoit les images reçues des différents terminaux, ce qui lui permet de collecter le plus de données possibles des différents terminaux.

Dans le cadre de ce procédé, lors de chaque prise de vue aux fins de reconnaissance optique prise par un terminal, l'application mobile transmet au service de reconnaissance optique 201 au moins l'image capturée du sujet, l'identifiant du modèle de terminal et la valeur de focus utilisée lors de la capture. L'identifiant du modèle de terminal et la valeur du focus sont typiquement intégrés aux métadonnées associées à l'image. Lorsque ce n'est pas le cas, elles peuvent être transmises conjointement à l'image.

Le service de reconnaissance optique 201 reçoit ces images associées à un identifiant de modèle de terminal et à une valeur de focus. Le service de reconnaissance optique est en charge d'estimer des valeurs de calibration sur la base des informations reçues depuis les applications mobiles. Cette estimation est faite par modèle de terminaux. Pour chaque modèle de terminal, le service de reconnaissance optique accumule les informations en provenance des différents terminaux de ce domaine, et lorsqu'il a reçu suffisamment d'information procède à l'estimation des informations de calibration pour le modèle de terminal concerné. Ces informations de calibration sont alors transmises par le service de reconnaissance optique aux terminaux du modèle concerné.

Ces échanges ne sont pas nécessairement synchrones. Il n'est pas nécessaire que les terminaux soient connectés au service de reconnaissance optique lors de la prise de vue. Par exemple, le terminal peut être hors de portée du réseau de communication lors de la prise de vue. Dans ce cas, le terminal mémorise les informations à transmettre et les transmet au service de reconnaissance optique lors de sa prochaine reconnexion au réseau. De manière similaire, le service de reconnaissance optique peut attendre la première reconnexion d'un terminal au réseau pour lui transmettre les informations de calibration. Dans le mode de réalisation préféré de l'invention, l'application mobile requiert les informations de calibration auprès du service de reconnaissance optique, par exemple lors de son lancement. En réponse à cette requête, le service de reconnaissance optique transmet les informations de calibration si elles sont disponibles. Lorsque les informations de calibration ne sont pas disponibles, la réponse à la requête transmet une information indiquant cette indisponibilité des informations de calibration.

Les informations de calibration sont mémorisées par le service de reconnaissance. Ainsi, lorsqu'un nouveau terminal se connecte pour la première fois au service de reconnaissance, et lorsque les informations de calibration ont été estimées pour le modèle du terminal, ces informations de calibration peuvent lui être transmises.

**Dans** un mode de réalisation dans lequel le service de reconnaissance optique et le service de calibration sont séparés, les informations de calibration sont mémorisées par le service de calibration. Le terminal peut être hors de portée du réseau de communication lors de la prise de vue, le terminal mémorise alors les informations à transmettre et les transmet au service de calibration lors de sa prochaine reconnexion au réseau.

La figure 3 illustre les principales étapes d'un procédé de calibration selon un mode de réalisation de l'invention.

Le procédé de calibration est typiquement exécuté par l'application de reconnaissance optique 201. Alternativement, ce procédé peut être mis en œuvre par un service de calibration dédié séparé du service de reconnaissance optique tel que décrit ci-dessus. Il vise à estimer une relation entre la valeur de focus et la résolution du sujet dans l'image obtenue. Il est ici rappelé que la résolution est ici la résolution par rapport à la taille du sujet. Cette relation une fois obtenue constitue les données de calibration.

Lors d'une première étape S301, le service de reconnaissance optique reçoit du terminal, notamment de l'application mobile d'un terminal, une image du sujet capturée lors d'une reconnaissance optique associée à l'identifiant du modèle de terminal et de la valeur de focus associée. Ces informations sont communiquées au service de calibration pour être traitées lorsque ce dernier est séparé du service de reconnaissance optique.

Lors d'une étape S302, le point correspondant est calculé. Le point est défini dans l'espace à deux dimensions comportant les valeurs de focus en abscisse et la résolution par rapport au sujet en ordonnée. La taille physique du sujet est connue. Par exemple, si le sujet est un doigt dans le cadre d'une reconnaissance d'empreinte digitale, la taille peut correspondre à la largeur moyenne d'un doigt humain. Cette valeur est une constante prédéfinie du procédé, par exemple stockée dans une table.

La taille de l'image capturée est ici supposée identique pour tous les terminaux d'un modèle particulier. En effet, la taille de l'image capturée est contrôlée par l'application mobile lors de la prise de vue qui peut imposer une taille fixe pour tous les terminaux. Dans certains modes de réalisation, cette taille peut varier, il faut alors tenir compte de ces différences dans le calcul. Il est alors possible de normaliser cette taille, c'est-à-dire de redimensionner les images reçues à une même taille pour effectuer les calculs.

Le service de reconnaissance optique procède alors à une détection du sujet dans l'image reçue. Cette détection peut être faite par tout algorithme de détection d'objet connue de l'homme du métier. Par exemple, l'algorithme YOLO (pour « *You Only Look Once »* en anglais) Une fois le sujet identifié dans l'image, son type est déterminée et sa taille extraite de la table. Le type du sujet est typiquement connu, les applications de reconnaissance étant typiquement dédiées à un type de sujet. Alternativement, le type de sujet peut être déterminé par un algorithme de classification dans le cas où l'application peut traiter plusieurs types de sujet. Cette détermination du type de sujet peut également être faite par le terminal et l'information de type du sujet transmise conjointement à l'image. Le service de reconnaissance optique procède à une mesure de sa taille dans l'image exprimée en pixels. Par exemple, dans le cas du doigt, le service de reconnaissance optique va mesurer la largeur du doigt en pixel dans l'image.

Le rapport entre la taille du sujet mesurée en pixel dans l'image et la taille connue du sujet correspond à la résolution du sujet dans l'image reçue.

Le couple composé de la valeur de focus et de la résolution du sujet dans l'image constitue le point associé à cette image.

Lors de l'étape S303, le point calculé est mémorisé en association avec le modèle de terminal concerné. Le service de reconnaissance optique accumule donc en mémoire les points calculés pour chaque image reçue par modèle de terminal concerné.

Lors de l'étape S304, il est testé si le nombre de points accumulés pour le modèle de terminal concerné est suffisant. Ce nombre de points accumulés est comparé à un seuil prédéterminé. Ce seuil prédéterminé peut dépendre du type du sujet et du modèle de terminal. Par exemple, dans le cas de documents, la taille du sujet est connue précisément alors que la taille d'un doigt est moins précise, il peut alors être nécessaire d'accumuler plus de points pour un doigt que pour un document. Le nombre de points doit être suffisant pour permettre l'estimation de la relation entre la valeur de focus et la résolution du sujet dans l'image. Dans l'exemple de réalisation, le sujet est un doigt, et les valeurs de seuil utilisées sont, par exemple, des valeurs entre 100 et 1000

Tant que le nombre de points suffisant n'est pas atteint, le service de reconnaissance optique continue l'accumulation en revenant à l'étape S301.

Lorsque le nombre de points accumulés est suffisant, il est procédé à l'étape S305 de régression. Cette étape vise à estimer la relation entre la valeur de focus et la résolution du sujet dans l'image. Il s'agit donc d'estimer l'équation de la courbe moyenne représentant le nuage de points accumulés. Cette équation est par exemple polynomiale, cette étape consistant alors en une étape de régression polynomiale bien connue de l'homme du métier. Alternativement, une régression non paramétrique utilisant une estimation par noyau, également connue sous le nom de méthode de Parzen-Rosenblatt, peut être utilisée.

Dans un mode de réalisation de l'invention, l'équation est assumée linéaire, qui est un cas particulier d'équation polynomiale. La régression est donc linéaire et permet d'estimer l'équation de la droite représentative des points accumulés dans l'espace à deux dimensions des valeurs de focus et des résolutions du sujet dans l'image.

Lors de cette phase initiale de calibration, la détection de fraude telle que décrite ci-après n'est pas activée. Certaines des images obtenues à l'étape S301 peuvent donc être issue d'une tentative de fraude. Ces images vont typiquement générer des points que l'on peut qualifier d'aberrants qui vont s'éloigner de la courbe représentative des points issus d'images non frauduleuses. En choisissant un seuil de nombre de points suffisant assez élevé, le nombre de points aberrants reste suffisamment bas pour ne pas modifier significativement l'estimation de la relation.

Dans certains modes de réalisation de l'invention, une nouvelle régression est effectuée sans les points dont la distance à la courbe obtenue lors de la première régression est supérieure à un seuil. Cela permet d'éviter que ces points aberrants ne perturbent l'estimation.

Une fois l'estimation de la relation faite, cette relation correspondant au résultat de la calibration est transmise à l'ensemble des terminaux du modèle concerné lors de l'étape S307. Cette transmission peut prendre différentes formes selon les modes de réalisation. Les informations de calibration peuvent être intégrées à une mise à jour de l'application mobile, la transmission ayant alors lieu lors de la mise à jour de l'application mobile. Alternativement, l'application mobile transmet une requête pour les informations de calibration, par exemple lors de l'accès au service. Selon une autre variante, les terminaux ne stockent pas les informations de calibration et les téléchargent lors de chaque capture d'image.

Dans certains modes de réalisation, une étape supplémentaire S306 est insérée avant la transmission. Lors de cette étape S306, des conditions supplémentaires sont testées avant de valider la calibration. Par exemple, il peut être déterminé un coefficient de corrélation lors de la régression. Ce coefficient de corrélation est représentatif de l'écart type des points à la courbe estimée. Tant que ce coefficient de corrélation est inférieur à un seuil prédéterminé, par exemple 0,95, l'accumulation continue et l'on revient à l'étape S301. Ce n'est que lorsque le coefficient de corrélation devient supérieur à ce seuil que la calibration est validée et que la relation est transmise à l'étape S307.

Une fois la relation transmise aux terminaux, ou mise à disposition de ces derniers, la calibration est terminée.

**Le** procédé ici décrit envisage essentiellement quatre différents types de sujets, le doigt pour une reconnaissance d'empreinte digitale, la paume de la main pour une reconnaissance palmaire, la face du sujet et les documents officiels. Le procédé de calibration s'effectue pour un seul type de sujet. Dans le cas d'une même application pouvant reconnaitre plus d'un type de sujet, les données sont accumulées et traitées par type de sujet selon un premier mode de réalisation. Dans d'autres modes de réalisation, la calibration intègre des images de différents types de sujet. Dans ce cas, à partir du moment où la taille connue du sujet utilisée dans le procédé de calibration est bien la taille connue pour le type de sujet représenté dans chaque image, le procédé fonctionne de la même manière.

L'un des paramètres importants du procédé est la taille supposée connue du sujet. Dans le cas des documents officiels, ceux-ci étant normalisés, la taille est effectivement connue de manière précise. Dans le cas du doigt ou de la paume de la main, la taille retenue est une taille moyenne standard. Cette taille est toutefois légèrement variable dans la population. Dans le cas de la reconnaissance faciale, la taille retenue est la distance entre les yeux. Cette variabilité entraîne une perte de précision sur la méthode de calibration sans toutefois remettre en cause sa pertinence. Dans certains modes de réalisation, le type de sujet peut être divisé en sous-types dans le cas du doigt, du visage ou de la paume. Par exemple, il est possible de créer un sous-type par classe d'âge et d'associer à chaque classe d'âge une taille de doigt, ou de paume, standard différente. Dans le cas de la reconnaissance faciale, il peut également être utilisé un estimateur qui donne une estimation de la distance entre les yeux en fonction de la forme du visage. Dans le cas des documents, un sous-type peut également être utilisé, par exemple la taille d'une carte d'identité peut varier selon le pays concerné. La taille attendue du sujet utilisée dans le procédé dépend alors du sous-type du sujet.

Dans certains modes de réalisation, les données issues de l'ensemble des sous-types sont utilisées pour la calibration. Dans d'autres modes de réalisation, une calibration est réalisée par sous-type de sujet.

Dans certains modes de réalisation, une fois cette calibration initiale terminée, un procédé d'adaptation continue de la calibration est exécuté. Ce procédé est similaire au procédé de calibration initiale avec les différences suivantes. L'étape S304 disparaît, car le nombre de points accumulés est maintenant toujours suffisant. La condition de l'étape S306 est modifiée. Lors de l'étape S306, il est alors testé si la relation obtenue diffère de la relation courante d'une valeur supérieure à un seuil prédéterminé, par exemple de 5%.

Lorsque c'est le cas, la nouvelle estimation de la relation, assumée plus pertinente car estimée sur un plus grand nombre de points est mémorisée, notamment dans le serveur de la plateforme 200 du service de reconnaissance, et transmise aux terminaux du modèle concerné pour être utilisée comme résultat de la corrélation. Elle devient la nouvelle relation courante.

Ainsi, la calibration peut être affinée en continu.

La figure 4 illustre les principales étapes du procédé de calibration et son utilisation par le terminal dans des modes de réalisation de l'invention.

Lors de l'étape S401, le terminal procède à une reconnaissance optique sous le contrôle de l'application mobile. Cette étape de reconnaissance optique comporte la capture d'une image du sujet. Le traitement de l'image capturée en vue de la reconnaissance optique peut être effectué par le terminal, par le service de reconnaissance optique après transmission lors de l'étape S402, ou encore de manière distribuée, certaines étapes étant faite par le terminal d'autres par le service de reconnaissance optique.

Lors de l'étape S402, le terminal transmet l'image capturée associée à l'identifiant du modèle du terminal et de la valeur de focus utilisée au service de reconnaissance optique.

Ces étapes S401 et S402 peuvent être exécutée en boucle selon l'usage fait par l'utilisateur du terminal de la fonction de reconnaissance optique.

Lors de l'étape S403, le terminal reçoit les informations de calibration, c'est-à-dire l'estimation de la relation entre les valeurs de focus et la résolution du sujet dans l'image. Cette étape peut se produire avant toute exécution des étapes S401 et S402, par exemple dans le cas d'un terminal mettant en service la reconnaissance optique alors que ce modèle de terminal a déjà été calibré par le service de reconnaissance optique. Par exemple, le terminal démarrant une première capture se connecte au service de reconnaissance, transmet son modèle de terminal et requiert les informations de calibration correspondantes. Si les informations de calibration sont disponibles pour ce modèle de terminal, le service les transmet en réponse à la requête. Dans ce mode de réalisation, l'étape S403 peut être vue comme une sous étape de l'étape S401.

Dans certains modes de réalisation, la réception de la relation déclenche une étape S404 de configuration d'un guide pour l'utilisateur du système de reconnaissance optique. En effet, une résolution minimale est généralement requise pour le bon fonctionnement de la reconnaissance optique. Eventuellement, une résolution maximale peut également être fixée. En utilisant la relation reçue à l'étape S403, il est possible de déterminer les valeurs de focus correspondant à ces résolutions minimale et éventuellement maximale. Il est ainsi possible de déterminer une plage de valeur de focus à utiliser lors de l'étape de reconnaissance optique S401 sur la base de la relation. Lors des étapes suivantes de reconnaissance optique S401, une indication invitant à éloigner ou rapprocher le sujet de l'objectif lors de la capture est générée. Cette indication peut être affichée sur l'écran du terminal. Cette indication peut être affichée jusqu'à obtention d'une image associée à une valeur de focus dans la plage souhaitée.

L'étape S403 de réception de la relation déclenche également l'étape S405 de configuration de la détection de fraude. En effet, la relation peut être utilisée par l'étape S401 de reconnaissance optique pour comparer la résolution du sujet dans l'image telle que mesurée dans l'image obtenue et la résolution du sujet dans l'image attendue. La résolution du sujet dans l'image attendue est la résolution du sujet dans l'image telle que donnée par la relation reçue à partir de la valeur de focus associée à l'image capturée. Lorsque la différence entre ces résolutions mesurée et attendue est supérieure à seuil prédéterminé, par exemple 10%, il est déterminé une suspicion de fraude. Typiquement, cette suspicion de fraude provoque l'échec de l'étape de reconnaissance optique S401 ou tout autre traitement approprié.

Alternativement, dans les modes de réalisation où la reconnaissance optique est faite par le service de reconnaissance optique, notamment via un navigateur du terminal, la détection de fraude est configurée et effectuée sur la plateforme par le service de reconnaissance optique.

Avantageusement, les images capturées pour lesquelles une suspicion de fraude est détectée ne sont pas transmises au service de reconnaissance optique. Alternativement, elles sont transmises associées à une indication indiquant la suspicion de fraude. Avantageusement, les informations de focus et de résolution mesurée sont également transmises avec l'image et l'indication de suspicion de fraude pour permettre une traçabilité des détections de fraudes. Avantageusement, lorsqu'une adaptation continue de la calibration est effectuée, ces images frauduleuses ne sont alors pas utilisées par la calibration.

La figure 5 est un bloc-diagramme schématique d'un dispositif de traitement de l'information 500 pour la mise en œuvre d'un ou plusieurs modes de réalisation de l'invention. Le dispositif 500 peut correspondre à un terminal mobile 210-230 ou encore à un serveur de la plateforme 200. Le dispositif 500 de traitement de l'information peut être un périphérique tel qu'un micro-ordinateur, un poste de travail ou un terminal mobile de télécommunication. Le dispositif 500 comporte un bus de communication connecté à:
- une unité centrale de traitement 501, tel qu'un microprocesseur, notée CPU ;
- une mémoire à accès aléatoire 502, notée RAM, pour mémoriser le code exécutable du procédé de réalisation de l'invention ainsi que les registres adaptés à enregistrer des variables et des paramètres nécessaires pour la mise en œuvre du procédé selon des modes de réalisation de l'invention ; la capacité de mémoire du dispositif peut être complétée par une mémoire RAM optionnelle connectée à un port d'extension, par exemple :
- une mémoire morte 503, notée ROM, pour stocker des programmes informatiques pour la mise en œuvre des modes de réalisation de l'invention ;
- une interface réseau 504 est normalement connectée à un réseau de communication sur lequel des données numériques à traiter sont transmis ou reçus. L'interface réseau 504 peut être une seule interface réseau, ou composée d'un ensemble d'interfaces réseau différentes (par exemple filaire et sans fil, interfaces ou différents types d'interfaces filaires ou sans fil). Des paquets de données sont envoyés sur l'interface réseau pour la transmission ou sont lues à partir de l'interface de réseau pour la réception sous le contrôle de l'application logiciel exécuté dans le processeur 501 ;
- une interface utilisateur 505 pour recevoir des entrées d'un utilisateur ou pour afficher des informations à un utilisateur ;
- un dispositif de stockage 506 tel que décrit dans l'invention et noté HD ;
- un module d'entrée/sortie 507 pour la réception / l'envoi de données depuis / vers des périphériques internes ou externes tels que disque dur, caméra, support de stockage amovible ou autres.

Le code exécutable peut être stocké dans une mémoire morte 503, sur le dispositif de stockage 506 ou sur un support amovible numérique tel que par exemple un disque. Selon une variante, le code exécutable des programmes peut être reçu au moyen d'un réseau de communication, via l'interface réseau 504, afin d'être stocké dans l'un des moyens de stockage du dispositif de communication 500, tel que le dispositif de stockage 506, avant d'être exécuté.

L'unité centrale de traitement 501 est adaptée pour commander et diriger l'exécution des instructions ou des portions de code logiciel du programme ou des programmes selon l'un des modes de réalisation de l'invention, instructions qui sont stockées dans l'un des moyens de stockage précités. Après la mise sous tension, le CPU 501 est capable d'exécuter des instructions de la mémoire RAM principale 502, relatives à une application logicielle. Un tel logiciel, lorsqu'il est exécuté par le processeur 501, provoque l'exécution des procédés décrits.

Dans ce mode de réalisation, l'appareil est un appareil programmable qui utilise un logiciel pour mettre en œuvre l'invention. Toutefois, à titre subsidiaire, la présente invention peut être mise en œuvre dans le matériel (par exemple, sous la forme d'un circuit intégré spécifique ou ASIC).

Naturellement, pour satisfaire des besoins spécifiques, une personne compétente dans le domaine de l'invention pourra appliquer des modifications dans la description précédente.

Bien que la présente invention ait été décrite ci-dessus en référence à des modes de réalisation spécifiques, la présente invention n'est pas limitée aux modes de réalisation spécifiques, et les modifications qui se trouvent dans le champ d'application de la présente invention seront évidentes pour une personne versée dans l'art.

## Revendications

1. Procédé de calibration des terminaux mobiles d'un même modèle équipé d'une caméra utilisée dans un procédé de reconnaissance optique sans contact **caractérisé en ce qu'**il comporte les étapes suivantes :
- obtention d'une première pluralité d'images de sujets capturées par des terminaux d'un même modèle de terminal, chaque image étant associée à une valeur de mise au point utilisée lors de la capture ;
- pour chaque image, détermination d'une résolution du sujet dans l'image à partir de la taille connue du sujet et de la taille en pixel du sujet dans l'image ;
- estimation d'une première relation entre la valeur de mise au point et la résolution du sujet dans l'image par régression sur un ensemble de points, chaque point correspondant au couple valeur de mise au point et résolution du sujet dans l'image pour une image obtenue ;
- transmission de la première relation estimée aux terminaux du même modèle.

2. Procédé selon la revendication 1, **caractérisé en ce que** l'étape d'estimation d'une relation est exécutée lorsque le nombre d'images obtenues est supérieur à un seuil prédéterminé.

3. Procédé selon l'une des revendications 1 à 2, **caractérisé en ce que** l'étape de transmission est exécutée lorsque qu'un coefficient de corrélation obtenu lors de la régression est supérieur à un seuil prédéterminé.

4. Procédé selon l'une des revendications 1 à 3, **caractérisé en ce que** l'étape d'estimation d'une relation est suivie d'une étape de calcul de la distance de chaque point à la courbe obtenue et d'une étape d'estimation d'une nouvelle relation effectuée en excluant les points les plus éloignés de la courbe obtenue lors de la première estimation.

5. Procédé selon l'une des revendications 1 à 4, **caractérisé en ce qu'**il comporte après l'estimation de la première relation les étapes suivantes :
- obtention d'une seconde pluralité d'images de sujets capturées par des terminaux du même modèle de terminal, chaque image étant associée à une valeur de mise au point utilisée lors de la capture ;
- pour chaque image de la seconde pluralité d'images, détermination d'une résolution du sujet dans l'image à partir de la taille connue du sujet et de la taille en pixel du sujet dans l'image ;
- estimation d'une seconde relation entre la valeur de mise au point et la résolution du sujet dans l'image par régression sur un ensemble de points, chaque point correspondant au couple valeur de mise au point et résolution du sujet dans l'image pour une image obtenue appartenant à la première ou à la seconde pluralité d'images ;
- transmission de la seconde relation estimée aux terminaux du même modèle si la différence entre la première relation et la seconde relation est supérieure à un seuil prédéterminé.

6. Procédé selon l'une des revendications 1 à 5, **caractérisé en ce que** l'étape d'obtention d'une première pluralité d'images comporte pour chaque image une étape de détection d'un type de sujet représenté dans l'image.

7. Procédé selon l'une des revendications 1 à 6, **caractérisé en ce que** le sujet appartient à un type de sujets parmi les types de sujets suivants :
- doigt,
- paume de la main,
- visage,
- document.

8. Procédé de reconnaissance optique d'un sujet comportant, par un terminal comportant une caméra, les étapes suivantes :
- capture d'une image du sujet associée à la valeur de mise au point utilisée lors de la capture ;
- reconnaissance optique du sujet ;
**caractérisé en ce qu'**il comporte les étapes suivantes :
- obtention d'une relation entre la valeur de mise au point et la résolution du sujet dans l'image ;
- détermination d'une résolution mesurée du sujet dans l'image à partir d'une taille connue du sujet et de la taille en pixel du sujet dans l'image ;
- détermination d'une résolution attendue du sujet dans l'image déterminée à partir de la valeur de mise au point et de la relation obtenue ;
- rejet de l'image capturée pour suspicion de fraude lorsque la résolution mesurée et la résolution attendue diffèrent d'une valeur supérieure à un seuil prédéterminé.

9. Procédé selon la revendication 8, **caractérisé en ce qu'**il comporte les étapes suivantes :
- détermination d'une plage de résolution du sujet dans l'image relative à la reconnaissance optique du sujet ;
- détermination de la plage correspondante de valeurs de mise au point sur la base de la relation ;
- détermination d'une indication indiquant de rapprocher ou d'éloigner le sujet lors de la capture lorsque la valeur de mise au point est en dehors de la plage ; et
- affichage de l'indication lors de la capture de l'image.

10. Produit programme informatique comportant des instructions pour la mise en œuvre du procédé selon l'une des revendications 1 à 9, lorsque ce programme est exécuté par un processeur (501).

11. Support d'enregistrement non transitoire lisible par un ordinateur sur lequel est enregistré un programme pour la mise en œuvre du procédé selon l'une des revendications 1 à 9 lorsque ce programme est exécuté par un processeur (501).

12. Dispositif de calibration des terminaux d'un même modèle équipé d'une caméra utilisée dans un procédé de reconnaissance optique **caractérisé en ce qu'**il comporte un processeur (501) configuré pour exécuter les étapes suivantes :
- obtention d'une première pluralité d'images de sujets capturées par des terminaux d'un même modèle de terminal, chaque image étant associée à une valeur de mise au point utilisée lors de la capture ;
- pour chaque image, détermination d'une résolution du sujet dans l'image à partir de la taille connue du sujet et de la taille en pixel du sujet dans l'image ;
- estimation d'une première relation entre la valeur de mise au point et la résolution du sujet dans l'image par régression sur un ensemble de points, chaque point correspondant au couple valeur de mise au point et résolution du sujet dans l'image pour une image obtenue ;
- transmission de la première relation estimée aux terminaux du même modèle.

13. Terminal mobile de reconnaissance optique sans contact d'un sujet, le terminal comportant une caméra et un processeur (501) configuré pour exécuter les étapes suivantes :
- capture d'une image du sujet associée à valeur de mise au point utilisée lors de la capture ;
- reconnaissance optique du sujet ;
**caractérisé en ce qu'**il comporte les étapes suivantes :
- obtention d'une relation entre la valeur de mise au point et la résolution du sujet dans l'image ;
- détermination d'une résolution mesurée du sujet dans l'image à partir d'une taille connue du sujet et de la taille en pixel du sujet dans l'image ;
- détermination d'une résolution attendue du sujet dans l'image déterminée à partir de la valeur de mise au point et de la relation obtenue ;
- rejet de l'image capturée lorsque la résolution mesurée et la résolution attendue diffère d'une valeur supérieure à un seuil prédéterminé.
